# EUROPEAN PATENT APPLICATION

(11) **EP 4 283 467 A1**
(43) Date of publication of application: **29.11.2023**
(21) Application number: 23174780.9
(22) Date of filing: 23.05.2023
(51) Int. Cl.: G06F 9/50, G06F 8/60, G06N 20/00, G06N 5/04

(54) **SYSTEMS AND METHODS FOR ARTIFICIAL INTELLIGENCE INFERENCE PLATFORM AND MODEL CONTROLLER**

(30) Priority: 24.05.2022 US 202263345232 P
(71) Applicant: Palantir Technologies Inc., Denver, CO 80202 (US)
(72) Inventor: KANG, Elliot, Denver, 80202 (US); CROSS, Jonathan, Denver, 80202 (US); CHEN, Qinfeng, Denver, 80202 (US); IMIG, Robert, Denver, 80202 (US); FACKLER, Steven, Denver, 80202 (US)
(74) Representative: Jolliffe, Jack Louis

(57) **Abstract**

Disclosed herein are systems and methods for model selection and update operation. The methods include receiving a model request with parameters selected from a group consisting of a type of computing model, a processing characteristic, and a data characteristic; receiving information associated with a plurality of computing models from a model repository; selecting one or more computing models based upon the model request; compiling a container request based on the model request and the one or more selected computing models; transmitting the container request to a container infrastructure; and coupling the one or more selected computing models to an artificial intelligence inference platform (AIP).

## Description

### CROSS REFERENCE TO RELATED APPLICATION

This application claims priority to U.S. Provisional Application No. 63/345,232, filed May 24, 2022, incorporated by reference herein in its entirety for all purposes.

### TECHNICAL FIELD

Certain embodiments of the present disclosure are directed to systems and methods for using artificial intelligence (AI) models and other computational models. More particularly, some embodiments of the present disclosure provide systems and methods for model selection and update operation.

### BACKGROUND

Artificial intelligence (AI) is widely used in analyzing data to facilitate object detection, prediction, decision making, and other uses. For example, AI inference is a process of using AI models to make a prediction. AI inference often needs a large number of computing resources and memory resources.

Hence, it is generally desirable to improve the techniques for selecting and/or updating AI models in view of the different types of data being provided to AI models.

### SUMMARY

Certain embodiments of the present disclosure are directed to systems and methods for using artificial intelligence (AI) models and other computational models. More particularly, some embodiments of the present disclosure provide systems and methods for model selection and update operation.

According to some embodiments, a method for model selection and update operation includes receiving a model request including one or more request parameters. The one or more request parameters include at least one selected from a group consisting of: a type of computing model, a processing characteristic, and a data characteristic. The method further includes receiving information associated with a plurality of computing models from a model repository, and selecting one or more computing models of the plurality of computing models based upon the model request and the received information. In response to selecting the one or more computing models, a container request is compiled based on the model request and the one or more selected computing models. The method further includes transmitting the container request to a container infrastructure, and coupling the one or more selected computing models to an artificial intelligence inference platform (AIP). The method is performed using one or more processors.

According to certain embodiments, a system for model selection and update operation includes one or more memories comprising instructions stored thereon, and one or more processors configured to execute the instructions and perform operations. The operations include receiving a model request including one or more request parameters. The one or more request parameters include at least one selected from a group consisting of: a type of computing model, a processing characteristic, and a data characteristic. The operations further include receiving information associated with a plurality of computing models from a model repository, and selecting one or more computing models of the plurality of computing models based upon the model request and the received information. In response to selecting the one or more computing models, a container request is compiled based on the model request and the one or more selected computing models. The operations further include transmitting the container request to a container infrastructure, and coupling the one or more selected computing models to an AIP.

According to some embodiments, a method for model selection and update operation includes receiving a first model request including one or more first request parameters. The one or more first request parameters include at least one selected from a group consisting of: a type of computing model, a processing characteristic, and a data characteristic. The method further includes receiving information associated with a plurality of computing models from a model repository, and selecting at least a first computing model and a second computing model based upon the first model request. In response to selecting the first computing model and the second computing model, a processing pipeline based at least in part upon the first model request, the processing pipeline is compiled to include at least the first computing model and the second computing model, and a first container request is compiled based on the first model request, the first computing model, and the second computing model. The method further includes transmitting the first container request to a container infrastructure, and coupling the first computing model and the second computing model to an AIP. The method is performed using one or more processors.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

The accompanying drawings are incorporated in and constitute a part of this specification and, together with the description, explain the features and principles of the disclosed embodiments. In the drawings,
FIG. 1 depicts an illustrative diagram of an artificial intelligence (AI) platform (AIP) operation environment, in accordance with certain embodiments of the present disclosure;
FIG. 2 illustrates an AIP operation environment according to certain embodiments of the present disclosure;
FIG. 3 is a simplified diagram showing a method for AIP model selection and update operation according to certain embodiments of the present disclosure;
FIG. 4 is a simplified diagram showing a method for AIP model selection and update operation according to certain embodiments of the present disclosure;
FIG. 5 is an example implementation of an operation environment for AIP, in accordance with certain embodiments of the present disclosure; and
FIG. 6 is a simplified diagram showing a computing system for implementing a system for model selection and update operation according to one embodiment of the present disclosure.

### DETAILED DESCRIPTION

Conventional systems and methods often lack flexibility and/or compatibility in AI models. Conventional systems and methods typically include selecting an AI model, feed training data into the AI model in order to train the model, and then using the trained AI model to recognize patterns and make intelligent predictions or decisions based on new data input, such as sensor data. However, such conventional systems and methods cannot easily switch from the selected AI model to a different AI model or from one sensor to another sensor because, for example, doing so can lead to problems such as decreased accuracy in the predictions or decisions made by the model due to a mismatch between the sensor data that is being inputted and the AI model that is used to process the data, such as a mismatch in the data format of the sensor data and the AI model.

Various embodiments of the present disclosure can achieve benefits and improvements for a computing system running one or more AI models to process data. In some embodiments, benefits include improvements, including, for example, increased efficiency and accuracy in implementing new models (e.g., AI models, ML (machine learning) models)and/or updating existing models (e.g., AI models, ML (machine learning) models), such that data can be processed by the new or updated models. In certain embodiments, benefits include improved compatibility between different sensors and AI models in a computing system including and using multiple different sensors and multiple different AI models to implement a more robust and interconnected system. In some embodiments, benefits include increased modularity or flexibility in that the sensors and/or the AI models associated therewith may be changed or updated without affecting the data connection between the sensors and the AI models. In certain embodiments, one or more AI models are capable of adapting to changes and/or or updates to the sensors and/or sensor data, such that the one or more AI models can consume and process sensor data in a real-time manner (that is, live or "on the fly") in order for the AI-derived predictions or decisions to be available real-time or near real-time (e.g., within 5 seconds, within 1 minute, etc.), thereby expediting the delivery of outcomes. In some embodiments, benefits include facilitating the AI models to be more lightweight by allocating computing and/or storage resources for a selected model or multiple selected models to be coupled to the appropriate interface or platform such that the systems and methods are configured to quickly, consistently, and constantly transfer streaming data such as high-scale, noisy sensor data, or full-motion video (FMV) to AI models, for example, in settings such as remote, air, space, and edge or other disconnected environments. In certain embodiments, additional benefits include facilitating model development and re-training even when networks may be unavailable.

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, certain some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items, and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information.

At least some embodiments of the present disclosure are directed to systems and methods for selecting, adding, updating, configuring, and managing data computing models dynamically. In certain embodiments, an AI Inference Platform (AIP) includes a model controller to select, manage, configure, deploy, add, update, start, replace, and/or remove one or more computing models within the AIP operation environment. In some embodiments, the model controller (e.g., a software module or component) is configured to interact with one or more model repositories (e.g., a model marketplace, a model hub) and one or more container infrastructures to select, manage, configure, deploy, add, update, start, replace, and/or remove one or more computing models within the AIP operation environment.

According to certain embodiments, the one or more model repositories are disposed on in one or more cloud servers, and/or one or more servers on the ground (e.g., not at the edge), one or more computing devices, and/or one or more other data repositories. In some examples, the one or more container infrastructures run on one or more edge devices. As used herein, an edge device refers to a computing device operating at the edge (e.g., not at a central server, or a cloud center). In some embodiments, an edge device is integrated with or disposed on a carrier (e.g., a vehicle, an aircraft, a satellite) deployed to a site with actions taken place. In certain embodiments, an edge device includes one or more sensors configured to collect data associated with the actions. In certain examples, at least one of the one or more container infrastructures runs on a computing device that is not an edge device. In some embodiments, a container infrastructure can instantiate, update, edit, or disconnect one or more models according to the received instructions (e.g., via an application programming interface, or API) and/or data (e.g., configuration data).

In certain embodiments, the AIP orchestrates between input sensor data and output model data. For example, one or more components of AIP are utilizing open standard formats (e.g., input data format, output data format). As an example, AIP takes care of the decoding of the input data, orchestration between processors and artificial intelligence (AI) models, and then packages up the results into an open output format for downstream consumers (e.g., a software application). According to some embodiments, an AIP system includes one or more AIPs to orchestrate one or more sensors, one or more edge devices, one or more user devices, one or more models, one or more container infrastructures, and one or more model repositories. In certain embodiments, at least some of the one or more sensors, one or more edge devices, one or more user devices, one or more models, one or more container infrastructures, and one or more model repositories are each associated with an AIP.

According to some embodiments, one or more AIPs, one or more sensors, and one or more models are disposed in an edge device. For example, the edge device is a satellite, and the sensor is an orbiting sensor. As an example, an edge device is a computer device integrated into an aircraft, a submarine, and/or a vehicle. As an example, an edge device includes one or more sensors in the air, in space, on/under the sea, in the water, on the land, and/or other locations. In certain examples, an edge device is a physical device including one or more sensors, an AIP, and/or one or more model(s). As used herein, a model, or referred to as a computing model or as an algorithm, includes a model to process data. A model includes, for example, an AI model, a machine learning (ML) model, a deep learning (DL) model, an image computing model, a physics model, simple heuristics, rules, a math model, other computing models, and/or a combination thereof. In some examples, the model is configured to generate an insight based on the processed sensor data.

According to certain embodiments, one or more models can be implemented on one or more processors (e.g., one or more central processing units (CPUs), one or more graphics processing units (GPUs), one or more digital signal processors (DSPs), one or more microprocessors, one or more processors, etc.) utilizing certain respective computing resources, where a model can also be referred to as a model processor (e.g., a verification processor, a geo-registration processor, etc.). As used herein, an insight refers to an output of a computing model. In certain examples, the AIP is configured to transmit collected sensor data, processed sensor data, and/or the insight to a user device (e.g., a server, a base station, a center station, a center node, a computing device at a mothership, etc.), for example, via a software interface (e.g., an application programing interface). As used herein, an API refers to any software interface coupling two or more software components including, for example, an application programming interface, a web service interface, and/or the like. In some embodiments, a software interface refers to a part of a software component or one or more software components interacting with another software component(s).

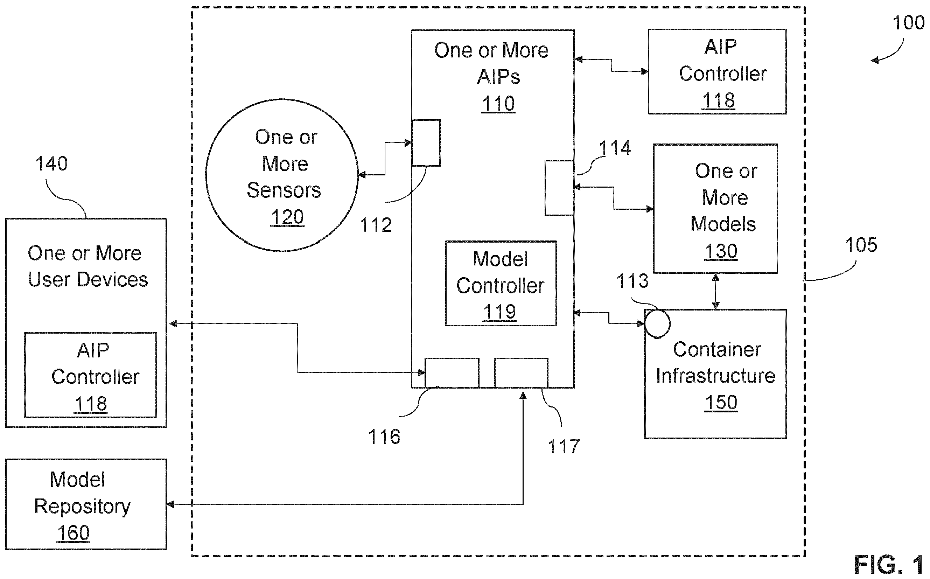

FIG. 1 illustrates an AIP operation environment 100 according to certain embodiments of the present disclosure. FIG. 1 is merely an example. One of ordinary skill in the art would recognize many variations, alternatives, and modifications. According to some embodiments, the AIP operation environment 100 includes one or more edge devices 105, one or more user devices 140, and/or one or more model repositories 160. In some examples, an AIP system includes one or more components in the AIP operation environment 100. According to certain embodiments, the one or more edge devices 105 include one or more AIPs 110, one or more AIP controllers 118, one or more sensors 120, one or more models 130, and/or one or more container infrastructure 150. In some embodiments, the one or more AIPs 110 include a model controller 119, a data API 112, an inference API 114, an open API 116, and/or a model API 117. Although the above has been shown using a selected group of components for the AIP 110, there can be many alternatives, modifications, and variations. For example, some of the components may be expanded and/or combined. Other components may be inserted to those noted above. Depending upon the embodiment, the arrangement of components may be interchanged with others replaced. Further details of these components are found throughout the present specification.

According to some embodiments, the one or more models 130 include one or more computing models, such as AI models, machine learning models, deep learning models, image processing models, physics models, simple heuristics, rules, math models, other computing models, and/or a combination thereof. For example, the one or more models 130 include one or more large language models (LLMs). In certain embodiments, at least a part of or all of the one or more models 130 include an open interface, for example, an interface interacted with or implemented by at least the inference API 114. In some embodiments, the one or more models 130 can be instantiated by or configured and deployed by the one or more container infrastructures 150. In certain embodiments, the one or more models 130 can utilize resources (e.g., computing resources, storage resources) allocated and/or designated by the one or more container infrastructures 150. In some embodiments, a container infrastructure 150 may include a container API 113 to provide an interface with the container infrastructure 150.

According to certain embodiments, the model controller 119 receives a model request, for example, by a message, an input, an interaction from the AIP controller 118, or a configuration. In some embodiments, the model request includes request parameters. In certain embodiments, the request parameters include one or more of a type of computing model, an instance of a computing model, a processing characteristic, a data characteristic, a resource and runtime configuration (e.g., a number of instances, a number of processing units) and/or the like. In some embodiments, the model controller 119 is configured to extract request parameters from the model request. In certain examples, the type of the computing model may include a type of a ML model, a type of DL model, a type of an AI model, a type of a computing model, and/or the like. In some examples, the instance of computing model may include a specific ML model, a specific DL model, a specific AI model, a specific computing model, and/or the like. In certain examples, the processing characteristic may include a video frame extraction, an imaging processing, an object recognition, a decoding, an encoding, and other data processing characteristic. In some examples, the data characteristic may include an input data type, an input data format, an input data volume, an input data range, an output data type, an output data format, and/or the like.

According to some embodiments, information associated with at least a part or all of the plurality of computing models are configured to be received or retrieved from the model repository 160 based on the model request and/or request parameters. In some embodiments, information associated with at least a part or all of the plurality of computing models are configured to be received or retrieved from the model repository 160 via the model API 117. In certain embodiments, the model API 117 is defined in the AIP 110. In some embodiments, the model controller 119 is configured to select one or more computing models of the plurality of computing models based upon the model request and the received information. For example, a computing model may be selected when information in the model request matched information associated with a computing model of the plurality of computing models.

According to certain embodiments, the model controller 119 is configured to compile a container request based on the model request and/or the one or more selected computing models. In certain embodiments, the container request includes a request using the container API 113. In some examples, the container API 113 is defined and/or updated by the container infrastructure 150. In certain examples, the container API 113 includes, for example, a container identifier, a type of computing model, an instance of a computing model, a processing characteristic, a data characteristic, a resource and runtime configuration (e.g., a number of instances, a number of processing units) and/or the like. In some embodiments, the container API 113 includes a part or all information of the model request. In certain embodiments, the model controller 119 is configured to extract model parameters from the model request to generate the container request in the format compliant with the container API 113. In some embodiments, the model controller 119 is configured to generate the container request using the request parameters extracted from the model request and/or the one or more selected computing models.

According to some embodiments, the model controller 119 is configured to send the container request to the container infrastructure 150. In certain embodiments, the model controller 119 receives information associated with, or of, a plurality of computing models from the container infrastructure 150. In certain embodiments, in response to the container request being sent, the model controller 119 receives information of a plurality of computing models from the container infrastructure 150. In some embodiments, the model controller 119 is configured to interact with the container infrastructure 150 using a controller interface (e.g., an API) of the AIP 110.

In certain embodiments, the model controller 119 is configured to provide an input including the one or more selected models to the container infrastructures. For example, the input includes memory and/or computing resource allocation of corresponding selected models. As an example, the input includes one or more configurations and/or connection requirements of corresponding selected models. In certain examples, the input includes metadata corresponding to selected models. In some embodiments, the model controller 119 is configured to provide the input via the container API 113 (e.g., in the container API format) to the container infrastructure 150. In certain embodiments, upon receiving the input, the container infrastructure 150 is configured to instantiate the one or more selected computing models as a part of the one or more models 130. In some embodiments, the container infrastructure 150 is configured to instantiate the one or more selected computing models based at least in part upon the input (e.g., memory resource allocation, computing resource allocation, one or more configurations, one or more connection requirements, and/or metadata). For example, the container infrastructure 150 is configured to start an instance (e.g., spin off an image of a model) of the one or more selected computing models. In some embodiments, the container infrastructure 150 is configured to update the one or more models 130 according to the one or more selected models, for example, adding, editing (e.g., changing parameter), updating (e.g., a new version), and/or disconnecting one or more models. In certain embodiments, the container infrastructure 150 is configured to allocate one or more resources associated with the one or more selected computing models (e.g., the one or more models 130).

According to some embodiments, the model controller 119 is configured to connect the one or more selected computing models to the AIP 110 via the inference API 114. In some examples, the inference API 114 is defined in the AIP 110. In certain examples, the software component interfacing with the inference API 114 is updated by the AIP 110. In certain examples, the software component interfacing with the inference API 114 is updated by the AIP 110 via the model controller 119. In certain embodiments, the model controller 119 is configured to create a processing pipeline using the one or more selected computing models based upon the model request. As used herein, a processing pipeline includes a plurality of computing models running sequentially or in parallel. For example, a processing pipeline includes a first and second computing model, where an output of the first computing model (e.g., an upstream model) is provided as an input of the second computing model (e.g., a downstream model). As an example, the processing pipeline includes the first computing model and a third computing model running in parallel. In some embodiments, the model controller 119 and/or the AIP 110 is configured to access the model repository 160 associated with the model request, for example, via the model API 117.

According to certain embodiments, the model controller 119 can provide a number of functionalities including, for example, processing unit allocation, CPU/GPU allocation, resource allocation, and also managing model cycle, automatic updating, and/or the like. In some examples, the model controller 119 implements a model update rule, for example, updating the model with a new release (e.g., a model version) every 60 days. In certain examples, the model controller 119 implements a model update rule, for example, updating the model only if certain criteria are satisfied (e.g., via a quality assurance check). For example, the model controller 119 allows a model version to be used after a validation on the model version's functionality and/or performance. In some embodiments, the model controller 119 is configured to monitor the model repository 160 on revisions of one or more models or new models. In certain embodiments, the model controller 119 is configured to receive one or more notifications on revisions of one or more models or new models becoming available. In some embodiments, the model controller 119 is configured to register the one or more models, new models, and/or the versions of the models. In certain embodiments, the model controller 119 is configured to register the models and associated metadata (e.g., type, resource requirement, data characteristics, etc.), for example, in a data repository.

According to certain embodiments, the data API 112 is configured to interface with the one or more sensors 120. In some examples, the data API 112 includes a specific data format (e.g., a predefined data format) or data stream format (e.g., a predefined data packet format) for a type of sensor. As an example, the data API 112 includes a first data format for a first sensor type (e.g., an image sensor) and a second data format for a second sensor type (e.g., a motion sensor), where the first data format is different from the second data format. For example, the data API 112 is configured to receive various sensor feeds. As an example, the data API 112 is configured to receive a sensor feed with data format information. In some embodiments, the data API 112 is defined in the AIP 110.

In certain examples, the AIP 110 is configured to receive sensor data via the data API 112. In some examples, the AIP 110 is configured to process the received sensor data received from the data API 112. In certain examples, the AIP 110 includes one or more models, computing units, and/or storage units. For example, the AIP 110 is configured to decode the sensor data. As an example, the AIP 110 is configured to extract a single frame from video data. In one example, the AIP 110 is configured to decode the extracted single frame. For example, the AIP 110 includes one or more AI models to recognize objects or patterns in the sensor data. As an example, the AIP 110 is configured to combine data.

In some examples, the AIP 110 and/or the inference API 114 is configured to couple (e.g., connect, operationally couple) to the one or more models 130. In certain examples, for a coupled (e.g., connected) model 130, the AIP 110 is configured to send command, data, and/or parameter to the coupled model 130 and receive output data (e.g., memory location of the output data) from the coupled model 130. In some embodiments, the AIP 110 is configured to couple to the one or more models 130 via the inference API 114. In certain examples, the inference API 114 includes a predetermined interface to couple to the one or more models 130. In some examples, the inference API 114 includes a dynamically configurable interface to couple to the one or more models 130. In certain embodiments, the AIP 110 is configured and/or updated by the model controller 119 to couple processing pipelines to or decouple processing pipelines from the one or more models 130 through the inference API 114. In some embodiments, the AIP 110 is configured and/or updated by the model controller 119 to couple processing pipelines to or decouple processing pipelines from the one or more models 130 through the inference API 114, for example, based upon information from the one or more container infrastructure 150. In some embodiments, the interface specification is predetermined but the system can dynamically add and/or remove models and/or processors that conform to that specification at runtime. In certain embodiments, the interface specification is predetermined but the system can dynamically add and/or remove models and/or processors according to the information from the container infrastructure 150, and/or the model controller 119, at runtime.

In some embodiments, the AIP 110 may be configured and/or updated by the model controller 119 based upon an additional model request. For example, the AIP system and/or model controller 119 receives (e.g., from the AIP controller 118) a first model request including one or more first request parameters, receives (e.g., from the model repository 160) information associated with the computing models, and selects (e.g., from the one or more models 130) at least a first computing model and a second computing model based upon the first model request. The AIP system and/or model controller 119 compiles a processing pipeline (e.g., order, schedule, latency, etc.) for using at least the first computing model and the second computing model, as well as a first container request. The first container request may be compiled based on the first model request and the processing pipeline, or the first container request may be compiled based on the first model request, the first computing model, and the second computing model. The AIP system and/or model controller 119 transmits the first container request to the container infrastructure 150, or to the container API 113 associated with the container infrastructure 150, and couples at least the first computing model and the second computing model (or the processing pipeline as compiled) to the AIP 110, for example via the inference API 114. The AIP system and/or model controller 119 receives (e.g., from the AIP controller 118) a second model request including one or more second request parameters that are different from the one or more first request parameters, which may be a request to update or reconfigure the AIP 110. The AIP system and/or model controller 119 selects (e.g., from the one or more models 130) at least a third computing model based upon the second model request and compiles a second container request based on the second model request and the third computing model. The AIP system and/or model controller 119 transmits the second container request to the container infrastructure 150, or to the container API 113 associated with the container infrastructure 150. The AIP system and/or model controller 119 decouples the first computing model and/or the second computing model (or the processing pipeline as compiled) from the AIP 110 and couples the third computing model to the AIP 110, for example via the inference API 114. In some examples, the third computing model may be part of a different processing pipeline, thus including additional computing model(s) such as a fourth computing model, for example. In some examples, a plurality of computing models may be decoupled from and coupled to the API 110 as configured by the inference API 114 as suitable, based on any additional model request as received, in order to update or reconfigure the AIP 110.

In certain examples, the inference API 114 is configured to couple to the one or more models 130 based upon a configuration (e.g., a system configuration, a user configuration) and/or an input (e.g., a user input, an input received via a software interface). In some embodiments, the inference API 114 is configured to couple to the one or more models 130 based upon a configuration and/or an input that is set up by the model controller 119 and/or the container infrastructure 150. In some embodiments, the inference API 114 is configured to couple to the one or more models 130 automatically or dynamically based on the processed sensor data. In certain examples, the AIP 110 is configured to transmit processed sensor data to the one or more models 130 via the inference API 114.

According to some embodiments, the AIP 110 is configured to change the one or more models 130 coupled via the inference API 114 dynamically. In certain embodiments, the AIP 110 is configured to change the one or more models 130 dynamically when the AIP 110 is running. In some examples, the AIP 110 is configured to change the one or more models 130 based upon a configuration (e.g., a system configuration, a user configuration) and/or an input (e.g., a user input, an input received via a software interface). In certain examples, the AIP 110 is configured to update the one or more models 130 via the model controller 119 and/or the container infrastructure 150.

According to certain embodiments, the AIP 110 is configured to change the one or more models 130 automatically (e.g., based on a data characteristic) or dynamically based on the processed sensor data. As an example, the AIP 110 is configured to change the one or more models 130 in response to changes to the sensor data collected via the one or more sensors 120. In certain examples, the AIP 110 is configured to change the one or more models 130 without affecting the connection to the one or more sensors 120. In some examples, the AIP 110 is configured to upgrade the one or more models 130 without affecting the connection to the one or more sensors 120. In certain examples, the AIP 110 is configured to replace the one or more models 130 with a new model without affecting the connection to the one or more sensors 120. In some examples, the one or more models 130 is changed, upgraded, and/or replaced by a push operation in the operation environment 100.

According to certain embodiments, the AIP 110 is configured to change the one or more sensors 120 coupled via the data API 112 dynamically. In certain examples, the AIP 110 is configured to change the one or more sensors 120 based upon a configuration (e.g., a system configuration, a user configuration) and/or an input (e.g., a user input, an input received via a software interface). In some examples, the AIP 110 is configured to change the one or more sensors 120 or add a coupled sensor automatically or dynamically, for example, based on a command received via a software interface.

According to some embodiments, the AIP controller 118 can be used to configure, control, and/or manage the one or more AIPs 110, including managing components to be coupled to the one or more AIPs 110. In certain examples, the AIP controller 118 is configured to send a request to the AIP 110 to make changes to the one or more sensors 120 and/or make changes to the one or more models 130. In certain embodiments, at least one of the one or more user devices 140 includes an AIP controller 118. In some embodiments, at least one of the one or more edge devices 105 includes an AIP controller 118. In some examples, the AIP controller 118 includes a user interface (e.g., a graphical user interface). In certain examples, the AIP controller 118 allows a user to select one or more algorithms to be added to a model 130, for example, via the model controller 119 and/or the container infrastructure 150. In some examples, the AIP controller 118 allows a user to select one or more algorithms to be updated to a model 130, for example, via the model controller 119 and/or the container infrastructure 150.

According to certain embodiments, the AIP controller 118 allows a user to select to deploy a new or updated model 130 to the AIP 110. In some embodiments, the AIP controller 118 allows a user to select to deploy a new or updated model 130 to the AIP 110, for example, via the model controller 119 and/or the container infrastructure 150. In some examples, the AIP controller 118 allows a user to configure a processing pipeline (e.g., order, schedule, latency, etc.) for using one or more models, one or more processors, and/or one or more edge devices. In some embodiments, the AIP controller 118 is configured to use a message (e.g., a low bandwidth message) to the AIP 110. In certain examples, in response to receiving the message, the AIP 110 updates the one or more models for deployment, for example, by loading the one or more models for a same hosting device or a local device (e.g., a computing device close by, a computing device connected by wire).

According to some embodiments, the AIP 110, the one or more sensors 120, and the one or more models 130 are disposed in an edge device 105. For example, the edge device 105 is a satellite, and the sensor 120 is an orbiting sensor. As an example, an edge device is an aircraft, a submarine, and/or a vehicle. As an example, an edge device includes one or more sensors in the air, in the space, under the sea, in the water, on the land, and/or other locations. In certain examples, an edge device is a physical device including one or more sensors, an AIP, an AIP controller and/or one or more model(s). In some examples, the one or more models 130 is configured to generate an insight based on the processed sensor data. As used herein, an insight refers to an output of a computing model. In certain examples, the open API 116 is configured to couple to the user device 140. In some examples, the AIP 110 is configured to transmit collected sensor data, processed sensor data, and/or the insight to the user device 140. In certain examples, the open API 116 is configured to broadcast to a network.

According to certain embodiments, the AIP operation environment 100 includes one or more edge devices 105, one or more user devices 140, and/or one or more model repositories 160, each or in combination, may include or have access to one or more memory repositories (e.g., data repositories, application repositories). In some embodiments, the data repository(s) (not shown) can include sensor data, processed sensor data, model data, model configuration data, AIP configuration, and/or the like. The data repository and/or the application repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the AIP operation environment 100 can execute software or firmware stored in non-transitory computer-readable medium (e.g., application repository) to implement various processing steps. Various components and processors of the operation software environment 100 can be implemented by one or more computing devices, including but not limited to, circuits, a computer, a cloud-based processing unit, a processor, a processing unit, a microprocessor, a mobile computing device, and/or a tablet computer. In some cases, various components of the operation software environment 100 (e.g., the one or more edge devices 105, the one or more user devices 140, etc.) can be implemented on a shared computing device. Alternatively, a component of the AIP operation environment 100 can be implemented on multiple computing devices. In some implementations, various modules and components of the operation software environment 100 can be implemented as software, hardware, firmware, or a combination thereof. In some cases, various components of the AIP operation environment 100 can be implemented in software or firmware executed by a computing device.

Various components of the AIP operation environment 100 can communicate via or be coupled to via a communication interface, for example, a wired or wireless interface. The communication interface includes, but not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

As discussed above and further emphasized here, FIG.. 1 is merely an example. One of ordinary skill in the art would recognize many variations, alternatives, and modifications. For example, a sensor 120 is replaced by a sub-system that includes one or more components that are not sensors. As an example, one or more models 130 is a micro-model.

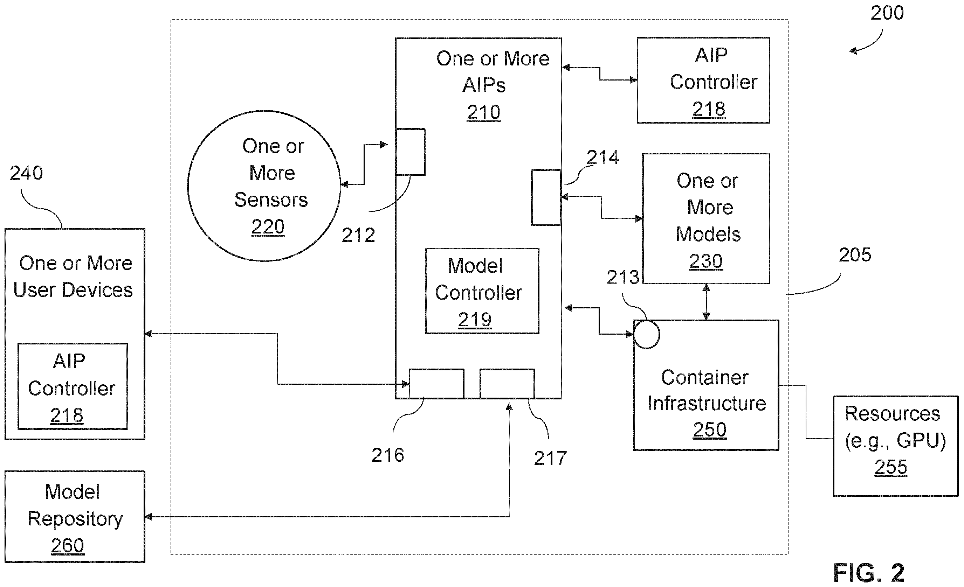

FIG. 2 illustrates an AIP operation environment 200 according to certain embodiments of the present disclosure. FIG. 2 is merely an example. One of ordinary skill in the art would recognize many variations, alternatives, and modifications. According to some embodiments, the operation environment 200 includes one or more edge devices 205, one or more user devices 240, one or more resources 255 (e.g., processing units, GPUs, CPUs, etc.), and/or one or more model repositories 260. In some examples, an AIP system includes one or more components in the AIP operation environment 100. According to certain embodiments, the one or more edge devices 205 include one or more AIPs 210, one or more AIP controllers 218, one or more sensors 220, one or more models 230, and/or one or more container infrastructures 250. In some embodiments, the one or more AIPs 210 include a model controller 219, a data API 212, an inference API 214, an open API 216, and/or a model API 217. Although the above has been shown using a selected group of components for the AIP 210, there can be many alternatives, modifications, and variations. For example, some of the components may be expanded and/or combined. Other components may be inserted to those noted above. Depending upon the embodiment, the arrangement of components may be interchanged with others replaced. Further details of these components are found throughout the present specification.

According to some embodiments, the one or more models 230 include one or more computing models, such as AI models, machine learning models, deep learning models, image processing models, physics models, simple heuristics, rules, math models, other computing models, and/or a combination thereof. For example, the one or more models 230 include one or more large language models (LLMs). In certain embodiments, at least a part of or all of the one or more models 230 include an open interface, for example, an interface interacted with or implemented by at least the inference API 214. In some embodiments, the one or more models 230 can be instantiated by or configured and deployed by the one or more container infrastructures 250. In certain embodiments, the one or more models 230 can utilize resources (e.g., computing resources, storage resources) allocated and/or designated by the one or more container infrastructures 250. In some embodiments, a container infrastructure 250 may include a container API 213 to provide an interface with the container infrastructure 250.

According to certain embodiments, the model controller 219 receives a model request, for example, by a message, an input, an interaction from the AIP controller 218, or a configuration. In some embodiments, the model request includes request parameters. In certain embodiments, the request parameters include a type of computing model, an instance of a computing model, a processing characteristic, a data characteristic, and/or the like. In some embodiments, the model controller 219 is configured to extract request parameters from the model request. In certain examples, the type of computing model may include a type of an ML model, a type of a DL model, a type of an AI model, a type of a computing model, and/or the like. In some examples, the instance of computing model may include a specific ML model, a specific DL model, a specific AI model, a specific computing model, and/or the like. In certain examples, the processing characteristic may include a video frame extraction, an image processing, an object recognition, a decoding, an encoding, and other data processing characteristic. In some examples, the data characteristic may include an input data type, an input data format, an input data volume, an input data range, an output data type, an output data format, and/or the like.

According to some embodiments, at least a part or all of the plurality of computing models are configured to be retrieved from the model repository 260 based on the model request and/or request parameters. In some embodiments, at least a part or all of the plurality of computing models are configured to be retrieved from the model repository 260 via the model API 217. In certain embodiments, the model API 217 is defined in the AIP 210. In some embodiments, the model controller 219 is configured to select one or more computing models based upon the model request.

According to certain embodiments, the model controller 219 is configured to compile a container request based on the model request. In certain embodiments, the container request includes a request using the container API 213. In some examples, the container API 213 is defined and/or updated by the container infrastructure 250. In certain examples, the container API 213 includes, for example, a container identifier, a type of computing model, an instance of a computing model, a processing characteristic, a data characteristic, and/or the like. In some embodiments, the container API 213 includes a part or all information of the model request. In certain embodiments, the model controller 219 is configured to extract model parameters from the model request to generate the container request in the format compliant with the container API 213. In some embodiments, the model controller 219 is configured to generate the container request using the parameters extracted from the model request and/or the one or more selected models.

According to some embodiments, the model controller 219 is configured to send the container request to the container infrastructure 250. In certain embodiments, the model controller 219 receives information of a plurality of computing models from the container infrastructure 250. In certain embodiments, in response to the container request being sent, the model controller 219 receives information of a plurality of computing models from the container infrastructure 250. In some embodiments, the model controller 219 is configured to interact with the container infrastructure 250 using a controller interface (e.g., an API) of the AIP 210.

In certain embodiments, the model controller 219 is configured to provide an input including the one or more selected models to the container infrastructures. For example, the input includes memory and/or computing resource allocation of corresponding selected models. As an example, the input includes configurations and/or connection requirements of corresponding selected models. In certain examples, the input includes metadata corresponding to selected models. In some embodiments, the model controller 219 is configured to provide the input via the container API 213 (e.g., in the container API format) to the container infrastructure 250. In certain embodiments, upon receiving the input, the container infrastructure 250 is configured to instantiate the one or more selected computing models as a part of the one or more models 230. For example, the container infrastructure 250 is configured to start an instance (e.g., spin off an image of a model) of the one or more selected computing models. In some embodiments, the container infrastructure 250 is configured to update the one or more models 230 according to the one or more selected models, for example, adding, editing (e.g., changing parameter), updating (e.g., a new version), and/or disconnecting one or more models. In certain embodiments, the container infrastructure 250 is configured to allocate one or more resources associated with the one or more selected computing models (e.g., the one or more models 230).

According to some embodiments, the container infrastructure 250 is configured to monitor the one or more resources 255. In certain embodiments, the resources 255 include resources in a corresponding edge device 205. In some embodiments, the resources 255 include resources in a plurality of computing devices including one or more edge devices 205, one or more user devices 240, one or more servers (not shown) (e.g., cloud servers), and a combination thereof. In certain examples, the resources 255 include computing resources (e.g., processing resources) and various tiers of memory resources. In some examples, the container infrastructure 250 is configured to allocate a computing model at one GPU. In certain examples, the container infrastructure 250 is configured to allocate a computing model to run at more than one GPU. In some examples, the container infrastructure 250 is configured to determine if and/or when a first model becomes inactive and allocate the resources (e.g., 50% of an GPU, 2 GPUs) to a second model, for example, a newly selected model.

According to certain embodiments, the container infrastructure 250 is configured to determine whether a model is inactive by monitoring the usage of processing units, data in- and-out of the model, and a combination thereof. For example, a model is determined to be inactive if the allocated processing unit(s) have relatively small percent of usage. As an example, a model is determined to be inactive if no data is coming in (e.g., as input). In one example, the edge device 205 includes four (4) models running concurrently. In this example, if the container infrastructure 250 would like to spin up a fifth model, but no resource is available at the container infrastructure 250. In one example, the existing four (4) models may be coupled to four (4) separate processing pipelines. For example, the container infrastructure 250 checks whether or not at least one of the four (4) models is active (e.g., actually being used). If not, the container infrastructure 250 can reallocate the GPU unit to the fifth model. In certain embodiments, the container infrastructure 250 is configured to virtualize the resources 255 (e.g., GPUs). In some examples, the container infrastructure 250 is configured to assign a fraction of a GPU to a model. In one example, the container infrastructure 250 may instantiate multiple models (e.g., 8 models) to run concurrently. In certain embodiments, the container infrastructure 250 is configured to allocate the one or more resources 255, via one or more corresponding resource controller (e.g., software control layer, software and hardware hybrid control).

According to some embodiments, the container infrastructure 250 is configured to set a prioritization for the one or more models 230 (e.g., selected models). For example, the container infrastructure 250 is configured to set a first model at a first priority level and a second model at a second priority level different from the first priority level. When a resource required by both the first model and the second model becomes available, the container infrastructure 250 is configured to assign the resource according to priority levels. For example, the container infrastructure 250 is configured to assign the resource to the first model if the first priority level is higher than the second priority level. In some embodiments, the container infrastructure 250 may allocate resources based at least in part upon the amount of resource required by a model.

According to some embodiments, the model controller 219 is configured to connect the one or more selected computing models to the AIP 210 via the inference API 214. In some examples, the inference API 214 is defined in the AIP 210. In certain examples, the inference API 214 is updated by the AIP 210. In certain examples, the inference API 214 is updated by the AIP 210 via the model controller 219. In certain embodiments, the model controller 219 is configured to create a processing pipeline using the one or more selected computing models based upon the model request. As used herein, a processing pipeline includes a plurality of computing models running sequentially or in parallel. For example, a processing pipeline includes a first and second computing model, where an output of the first computing model (e.g., an upstream model) is provided as an input of the second computing model (e.g., a downstream model). As an example, the processing pipeline includes the first computing model and a third computing model running in parallel. In some embodiments, the model controller 219 and/or the AIP 210 is configured to access the model repository 260 associated with the model request, for example, via the model API 217.

According to certain embodiments, the model controller 219 can provide a number of functionalities including, for example, processing unit allocation, CPU/GPU allocation, resource allocation, and also managing model life cycle, automatic updating, and/or the like. In some examples, the model controller 219 implements a model update rule, for example, updating the model with a new release (e.g., a model version) every 60 days. In certain examples, the model controller 219 implements a model update rule, for example, updating the model only if certain criteria are satisfied (e.g., via a quality assurance check). For example, the model controller 219 allows a model version to be used after a validation on the model version's functionality and/or performance. In some embodiments, the model controller 219 is configured to monitor the model repository 260 on revisions of one or more models or new models. In certain embodiments, the model controller 219 is configured to receive one or more notifications on revisions of one or more models or new models becoming available. In some embodiments, the model controller 219 is configured to register the one or more models, new models, the versions of the models. In certain embodiments, the model controller 219 is configured to register the models and associated metadata (e.g., type, resource requirement, data characteristics, etc.), for example, in a data repository.

According to certain embodiments, the data API 212 is configured to interface with the one or more sensors 220. In some examples, the data API 212 includes a specific data format (e.g., a predefined data format) or data stream format (e.g., a predefined data packet format) for a type of sensor. As an example, the data API 212 includes a first data format for a first sensor type (e.g., an image sensor) and a second data format for a second sensor type (e.g., a motion sensor), where the first data format is different from the second data format. For example, the data API 212 is configured to receive various sensor feeds. As an example, the data API 212 is configured to receive a sensor feed with data format information. In some embodiments, the data API 212 is defined in the AIP 210.

In certain examples, the AIP 210 is configured to receive sensor data via the data API 212. In some examples, the AIP 210 is configured to process the received sensor data received from the data API 212. In certain examples, the AIP 210 includes one or more models, computing units, and/or storage units. For example, the AIP 210 is configured to decode the sensor data. As an example, the AIP 210 is configured to extract a single frame from video data. In one example, the AIP 210 is configured to decode the extracted single frame. For example, the AIP 210 includes one or more AI models to recognize objects or patterns in the sensor data. As an example, the AIP 210 is configured to combine data.

In some examples, the AIP 210 and/or the inference API 214 is configured to couple (e.g., connect, operationally couple) to the one or more models 230. In certain examples, for a coupled (e.g., connected) model 230, the AIP 210 is configured send command, data, and parameter to the coupled model 230 and receive output data (e.g., memory location of the output data) from the coupled model 230. In some embodiments, the AIP 210 is configured to couple to the one or more models 230 via the inference API 214. In certain examples, the inference API 214 includes a predetermined interface to couple to the one or more models 230. In some examples, the inference API 214 includes a dynamically configurable interface to couple to the one or more models 230. In certain embodiments, the inference API 214 is configured and/or updated by the model controller 219. In some embodiments, the inference API 214 is configured and/or updated by the model controller 219 based upon information from the one or more container infrastructure 250. In certain embodiments, the inference API 214 is configured and/or updated by the model controller 219 and/or the AIP controller 218. In some embodiments, the interface specification is predetermined but the system can dynamically add and/or remove models and/or processors that conform to that specification at runtime. In certain embodiments, the interface specification is predetermined but the system can dynamically add and/or remove models and/or processors according to the information from the container infrastructure 250, and/or the model controller 219, at runtime.

In certain examples, the inference API 214 is configured to couple to the one or more models 230 based upon a configuration (e.g., a system configuration, a user configuration) and/or an input (e.g., a user input, an input received via a software interface). In some embodiments, the inference API 214 is configured to couple to the one or more models 230 based upon a configuration and/or an input that is set up by the model controller 219 and/or the container infrastructure 250. In some embodiments, the inference API 214 is configured to couple to the one or more models 230 automatically or dynamically based on the processed sensor data. In certain examples, the AIP 210 is configured to transmit processed sensor data to the one or more models 230 via the inference API 214.

According to some embodiments, the AIP 210 is configured to dynamically change the processing pipelines coupled to the one or more models 230 and/or how the data are sent to the one or more models 230 via the inference API 214. In certain embodiments, the AIP 210 is configured to change the one or more models 230 dynamically when the AIP 210 is running. In some examples, the AIP 210 is configured to change the one or more models 230 based upon a configuration (e.g., a system configuration, a user configuration) and/or an input (e.g., a user input, an input received via a software interface). In certain examples, the AIP 210 is configured to update the one or more models 230 via the model controller 219 and/or the container infrastructure 250.

According to certain embodiments, the AIP 210 is configured to change the one or more models 230 automatically (e.g., based on a data characteristic) or dynamically based on the processed sensor data. As an example, the AIP 210 is configured to change the one or more models 230 in response to changes to the sensor data collected via the one or more sensors 220. In certain examples, the AIP 210 is configured to change the one or more models 230 without affecting the connection to the one or more sensors 220. In some examples, the AIP 210 is configured to upgrade the one or more models 230 without affecting the connection to the one or more sensors 220. In certain examples, the AIP 210 is configured to replace the one or more models 230 with a new model without affecting the connection to the one or more sensors 220. In some examples, the one or more models 230 is changed, upgraded, and/or replaced by a push operation in the operation environment 200.

According to certain embodiments, the AIP 210 is configured to change the one or more sensors 220 coupled via the data API 212 dynamically. In certain examples, the AIP 210 is configured to change the one or more sensors 220 based upon a configuration (e.g., a system configuration, a user configuration) and/or an input (e.g., a user input, an input received via a software interface). In some examples, the AIP 210 is configured to change the one or more sensors 220 or add a coupled sensor automatically or dynamically, for example, based on a command received via a software interface.

According to some embodiments, the AIP controller 218 can be used to configure, control, and/or manage the one or more AIPs 210, including managing components to be coupled to the one or more AIPs 210. In certain examples, the AIP controller 218 is configured to send a request to the AIP 210 to make changes to the one or more sensors 220 and/or make changes to the one or more models 230. In certain embodiments, at least one of the one or more user devices 240 includes an AIP controller 218. In some embodiments, at least one of the one or more edge devices 205 includes an AIP controller 218. In some examples, the AIP controller 218 includes a user interface (e.g., a graphical user interface). In certain examples, the AIP controller 218 allows a user to select one or more algorithms to be added to a model 230, for example, via the model controller 219 and/or the container infrastructure 250. In some examples, the AIP controller 218 allows a user to select one or more algorithms to be updated to a model 230, for example, via the model controller 219 and/or the container infrastructure 250.

According to certain embodiments, the AIP controller 218 allows a user to select to deploy a new or updated model 230 to the AIP 210. In some embodiments, the AIP controller 218 allows a user to select to deploy a new or updated model 230 to the AIP 210, for example, via the model controller 219 and/or the container infrastructure 250. In some examples, the AIP controller 218 allows a user to configure a processing pipeline (e.g., order, schedule, latency, etc.) for using one or more models, one or more processors, and/or one or more edge devices. In some embodiments, the AIP controller 218 is configured to use a message (e.g., a low bandwidth message) to the AIP 210. In certain examples, in response to receiving the message, the AIP 210 updates the one or more models for deployment, for example, by loading the one or more models for a same hosting device or a local device (e.g., a computing device close by, a computing device connected by wire).

According to some embodiments, the AIP 210, the one or more sensors 220, and the one or more models 230 are disposed in an edge device 205. For example, the edge device 205 is a satellite, and the sensor 220 is an orbiting sensor. As an example, an edge device is an aircraft, a submarine, and/or a vehicle. As an example, an edge device includes one or more sensors in the air, in space, on/under the sea, , on land, and/or other locations. In certain examples, an edge device is a physical device including one or more sensors, an AIP, an AIP controller and/or one or more model(s). In some examples, the one or more models 230 is configured to generate an insight based on the processed sensor data. As used herein, an insight refers to an output of a computing model. In certain examples, the open API 216 is configured to couple to the user device 240. In some examples, the AIP 210 is configured to transmit collected sensor data, processed sensor data, and/or the insight to the user device 240. In certain examples, the open API 216 is configured to broadcast to a network.

According to certain embodiments, the AIP operation environment 100 includes one or more edge devices 105, one or more user devices 140, and/or one or more model repositories 160, each or in combination, may include or have access to one or more memory repositories (e.g., data repositories, application repositories). In some embodiments, the data repository(s) (not shown) can include sensor data, processed sensor data, model data, model configuration data, AIP configuration, and/or the like. The data repository and/or the application repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In other cases, a data repository may be hosted on a series of networked computers, servers, or devices. In some cases, a data repository may be hosted on tiers of data storage devices including local, regional, and central.

In some cases, various components in the AIP operation environment 200 can execute software or firmware stored in non-transitory computer-readable medium (e.g., application repository) to implement various processing steps. Various components and processors of the operation software environment 200 can be implemented by one or more computing devices, including but not limited to, circuits, a computer, a cloud-based processing unit, a processor, a processing unit, a microprocessor, a mobile computing device, and/or a tablet computer. In some cases, various components of the operation software environment 200 (e.g., the one or more edge devices 105, the one or more user devices 140, etc.) can be implemented on a shared computing device. Alternatively, a component of the AIP operation environment 200 can be implemented on multiple computing devices. In some implementations, various modules and components of the operation software environment 200 can be implemented as software, hardware, firmware, or a combination thereof. In some cases, various components of the AIP operation environment 200 can be implemented in software or firmware executed by a computing device.

Various components of the AIP operation environment 200 can communicate via or be coupled to via a communication interface, for example, a wired or wireless interface. The communication interface includes, but not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

As discussed above and further emphasized here, FIG. 2 is merely an example. One of ordinary skill in the art would recognize many variations, alternatives, and modifications. For example, a sensor 220 is replaced by a sub-system that includes one or more components that are not sensors. As an example, a one or more models 230 is a micro-model. As an example, at least one of the one or more resources 255 includes a control software (e.g., control layer) interfacing with the container infrastructure 250.

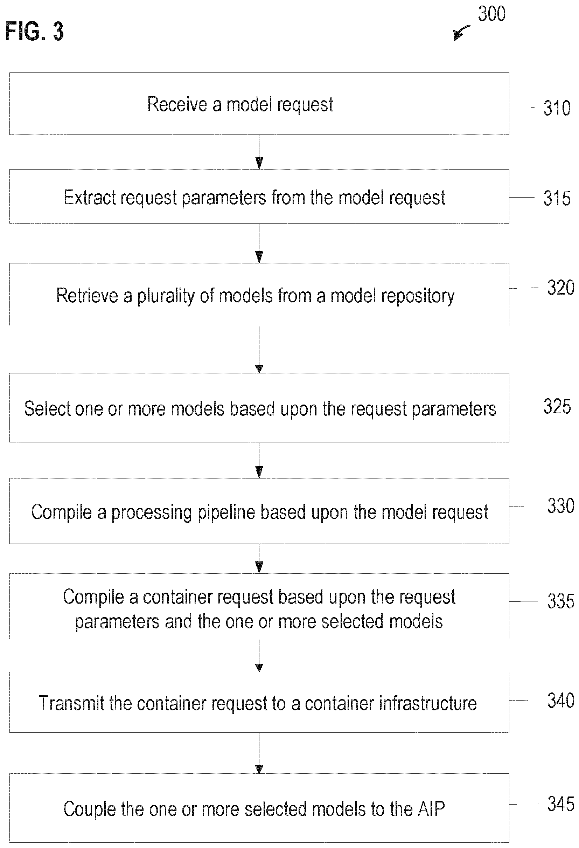

FIG. 3 is a simplified diagram showing a method 300 for AIP model selection and update operation according to certain embodiments of the present disclosure. This diagram is merely an example. One of ordinary skill in the art would recognize many variations, alternatives, and modifications. The method 300 for AIP model selection and update operation includes processes 310, 315, 320, 325, 330, 335, 340, and 345. Although the above has been shown using a selected group of processes for the method 300 for AIP model selection and update operation, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 300 are performed by the system 600. In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 310, the AIP system (e.g., an AIP system in the environment 100 in FIG. 1, an AIP system in the environment 200 in FIG. 2) and/or a model controller (e.g., the model controller 119 in FIG. 1, the model controller 219 in FIG. 2) is configured to receive or generate a model request. In certain embodiments, the model request is received from an AIP controller (e.g., the AIP controller 118 in FIG. 1, the AIP controller 218 in FIG. 2). In some embodiments, the AIP system and/or the model controller is configured to generate the model request based upon sensor data. For example, the AIP system and/or the model controller is configured to generate the model request based on a processing requirement for the sensor data.

According to certain embodiments, at the process 315, the AIP system and/or the model controller is configured to extract request parameters from the model request. In some examples, the request parameters include a type of computing model, an instance of a computing model, a processing characteristic, a data characteristic, and/or the like. In some embodiments, at the process 320, the AIP system and/or the model controller is configured to retrieve and/or access a plurality of models from a model repository (e.g., the model repository 160 in FIG. 1, the model repository 260 in FIG. 2).

According to some embodiments, at the process 325, the AIP system and/or the model controller is configured to select one or more models based upon the extracted model parameters. For example, the one or more selected models include one or more large language models (LLMs). In certain embodiments, the AIP system and/or the model controller is configured to select one or more models based upon the model request. In some examples, a model is selected based on a type of computing model extracted from the model request. In certain examples, a model is selected based on an instance of computing model extracted from the model request. In some examples, a model is selected based on a processing characteristic extracted from the model request. In certain examples, a model is selected based on a data characteristic extracted from the model request. In some examples, a model is selected based on two or more request parameters extracted from the model request.

According to certain embodiments, at the process 330, the AIP system and/or the model controller is configured to compile a processing pipeline based at least in part upon the model request. In some embodiments, the processing pipeline includes a plurality of computing models running sequentially or in parallel. For example, a processing pipeline includes a first and second computing model, where an output of the first computing model (e.g., an upstream model) is provided as an input of the second computing model (e.g., a downstream model). As an example, the processing pipeline includes the first computing model and a third computing model running in parallel. In some embodiments, at the process 335, the AIP system and/or the model controller is configured to compile a container request based upon the request parameters and the one or more selected models. In some examples, the container request is in the format of a container API (e.g., the container API 113 in FIG. 1, the container API 213 in FIG. 2). In certain examples, the container request includes metadata of at least one of the one or more selected models.

According to some embodiments, at the process 340, the AIP system and/or the model controller is configured to transmit the container request to a container infrastructure (e.g., the container infrastructure 150 in FIG. 1, the container infrastructure 250 in FIG. 2). In certain embodiments, the container request is received by a container infrastructure. In some embodiments, the container infrastructure is configured to instantiate the one or more selected models based on the container request.

According to certain embodiments, at the process 345, the AIP system and/or the model controller is configured to couple the one or more selected computing models to an AIP (e.g., the AIP 110 in FIG. 1, the AIP 210 in FIG. 2), for example, via an inference API (e.g., the inference API 114 in FIG. 1, the inference API 214 in FIG. 2). In certain embodiments, the AIP system and/or the model controller is configured to couple the running instances of one or more selected models to the AIP. In some embodiments, the AIP system and/or the model controller is configured to couple the running instances of one or more selected models to the AIP via one or more APIs (e.g., inference APIs).

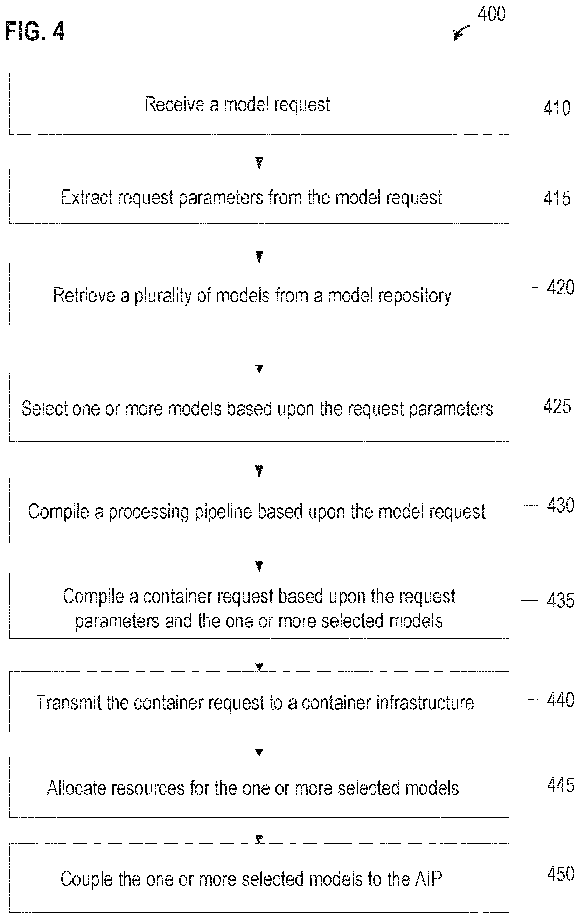

FIG. 4 is a simplified diagram showing a method 400 for AIP model selection and update operation according to certain embodiments of the present disclosure. This diagram is merely an example. One of ordinary skill in the art would recognize many variations, alternatives, and modifications. The method 400 for AIP model selection and update operation includes processes 410, 415, 420, 425, 430, 435, 440, 445, and 450. Although the above has been shown using a selected group of processes for the method 400 for AIP model selection and update operation, there can be many alternatives, modifications, and variations. For example, some of the processes may be expanded and/or combined. Other processes may be inserted to those noted above. Depending upon the embodiment, the sequence of processes may be interchanged with others replaced. Further details of these processes are found throughout the present disclosure.

In some embodiments, some or all processes (e.g., steps) of the method 400 are performed by the system 600. In certain examples, some or all processes (e.g., steps) of the method 400 are performed by a computer and/or a processor directed by a code. For example, a computer includes a server computer and/or a client computer (e.g., a personal computer). In some examples, some or all processes (e.g., steps) of the method 400 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 410, the AIP system (e.g., an AIP system in the environment 100 in FIG. 1, an AIP system in the environment 200 in FIG. 2) and/or a model controller (e.g., the model controller 119 in FIG. 1, the model controller 219 in FIG. 2) is configured to receive or generate a model request. In certain embodiments, the model request is received from an AIP controller (e.g., the AIP controller 118 in FIG. 1, the AIP controller 218 in FIG. 2). In some embodiments, the AIP system and/or the model controller is configured to generate the model request based upon sensor data. For example, the AIP system and/or the model controller is configured to generate the model request based on a processing requirement for the sensor data.

According to certain embodiments, at the process 415, the AIP system and/or the model controller is configured to extract request parameters from the model request. In some examples, the request parameters include a type of computing model, an instance of a computing model, a processing characteristic, a data characteristic, and/or the like. In some embodiments, at the process 420, the AIP system and/or the model controller is configured to retrieve and/or access a plurality of models from a model repository (e.g., the model repository 160 in FIG. 1, the model repository 260 in FIG. 2).

According to some embodiments, at the process 425, the AIP system and/or the model controller is configured to select one or more models based upon the extracted model parameters. For example, the one or more selected models include one or more large language models (LLMs). In certain embodiments, the AIP system and/or the model controller is configured to select one or more models based upon the model request. In some examples, a model is selected based on a type of computing model extracted from the model request. In certain examples, a model is selected based on an instance of computing model extracted from the model request. In some examples, a model is selected based on a processing characteristic extracted from the model request. In certain examples, a model is selected based on a data characteristic extracted from the model request. In some examples, a model is selected based on two or more request parameters extracted from the model request.

According to certain embodiments, at the process 430, the AIP system and/or the model controller is configured to compile a processing pipeline based at least in part upon the model request. In some embodiments, the processing pipeline includes a plurality of computing models running sequentially or in parallel. For example, a processing pipeline includes a first and second computing model, where an output of the first computing model (e.g., an upstream model) is provided as an input of the second computing model (e.g., a downstream model). As an example, the processing pipeline includes the first computing model and a third computing model running in parallel. In some embodiments, at the process 435, the AIP system and/or the model controller is configured to compile a container request based upon the request parameters and the one or more selected models. In some examples, the container request is in the format of a container API (e.g., the container API 113 in FIG. 1, the container API 213 in FIG. 2). In certain examples, the container request includes metadata of at least one of the one or more selected models.

According to some embodiments, at the process 440, the AIP system and/or the model controller is configured to transmit the container request to a container infrastructure (e.g., the container infrastructure 150 in FIG. 1, the container infrastructure 250 in FIG. 2). In certain embodiments, the container request is received by a container infrastructure. According to certain embodiments, at the process 445, the AIP system and/or the model controller, for example, via the container infrastructure, is configured to allocate resources (e.g., the one or more resources 255 in FIG. 2) for the one or more selected models. In some embodiments, the container request includes priority levels associated with the one or more selected models, the container infrastructure and/or the AIP system is configured to allocate resources based at least in part upon the priority levels. In certain embodiments, the container infrastructure is configured to instantiate the one or more selected models based on the container request. In some embodiments, the container infrastructure is configured to instantiate the one or more selected models based on the container request and using the allocated resources.

According to some embodiments, at the process 450, the AIP system and/or the model controller is configured to couple the one or more selected computing models to an AIP (e.g., the AIP 110 in FIG. 1, the AIP 210 in FIG. 2), for example, via an inference API (e.g., the inference API 114 in FIG. 1, the inference API 214 in FIG. 2). In certain embodiments, the AIP system and/or the model controller is configured to couple the running instances of one or more selected models to the AIP. In some embodiments, the AIP system and/or the model controller is configured to couple the running instances of one or more selected models to the AIP via one or more APIs (e.g., inference APIs).

According to some embodiments of the method 300 or 400, following the process 345 or 450, the AIP system and/or the model controller is configured to receive an additional model request including one or more request parameters, where the additional model request is different from the model request received in the process 310 or 410. The AIP system and/or the model controller is configured to select an additional computing model based on the additional model request, where the additional computing model is different from the one or more models selected in the process 325 or 425. The AIP system and/or the model controller is configured to compile an additional container request based on the additional model request and the additional computing model, where the additional container request is different from the container request compiled in the process 335 or 435. The AIP system and/or the model controller is configured to transmit the additional container request to the container infrastructure to which the container request was transmitted in the process 340 or 440. The AIP system and/or the model controller is configured to decouple at least one of the one or more of the computing models selected in the process 325 or 425 from the AIP and also couple the additional computing model as selected based on the additional model request to the AIP, for example via one or more APIs (e.g., inference APIs).

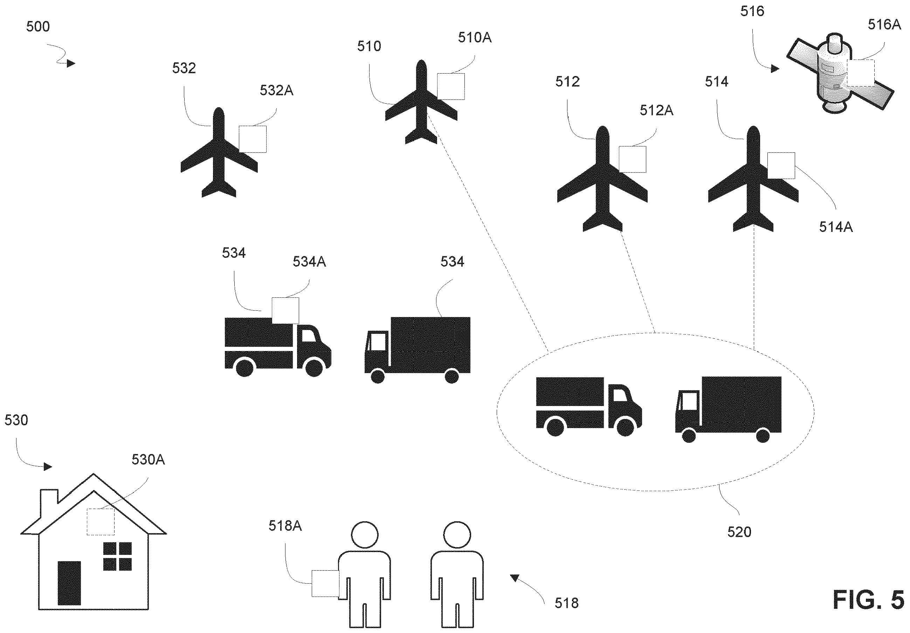

According to some embodiments, an example implementation of an operation environment 500 for AIP is illustrated in FIG. 5. FIG. 5 is merely an example. One of ordinary skill in the art would recognize many variations, alternatives, and modifications. In one example, an aircraft 510, for example, on the other side of the mountain, detects (e.g., sees) one or more targets 520 and the aircraft 510 is configured to relay the detection back to a base device 530A in a base station 530 and/or one or more other edge devices (e.g., an aircraft 512, an aircraft 514, a satellite 516, one or more devices 518 (e.g., the user device 140 in FIG. 1, the user device 240 in FIG. 2) associated with one or more persons, an aircraft 532, one or more vehicles 534). In certain embodiments, each of the edge devices 510, 512, 514, 516, 534, 536 includes a corresponding AIP 510A, 512A, 514A, 516A, 534A, 536A. In certain embodiments, each edge device includes an AIP (e.g., the AIP 110 in FIG. 1, the AIP 210 in FIG. 2). In some embodiments, at least some of the edge devices include an AIP. In certain embodiments, at least one of the edge devices does not include an AIP.

In some embodiments, while an edge device (e.g., the aircraft 512) is collecting sensor data regarding a target (e.g., target 520) may initiate direct, and/or coordinate with another edge device (e.g., the aircraft 514) to collect sensor data regarding the same target (e.g., target 520). In one example, a first edge device 510 may launch or cause a second edge device 512 to collect sensor data regarding the same target 520, for example, collecting images and/or videos from a different angle to see whether the target is a certain type of object of interest. In some examples, the AIP 512A may receive a corresponding model request and select, load, and start a requested computing model. In certain examples, the AIP 512A may receive a model request and select, load, and start a requested computing model via a model controller (e.g., the model controller 109 in FIG. 1, the model controller 209 in FIG. 2). In some examples, a container infrastructure (e.g., the container infrastructure 150 in FIG. 1, the container infrastructure 250 in FIG. 2) is configured to receive container request(s) and in response to the container request(s), load, instantiate, and/or update a computing model for the model request. In certain examples, the container infrastructure is configured to allocate resources (e.g., processing resources, memory resources) for the computing model based upon the model request.

In certain embodiments, two or more edge devices are configured to collect sensor data and confirm, for example, by one of the two or more edge devices or another control device, that the collected sensor data from the two or more edge devices are associated with the same target. In some examples, the collected sensor data from the two or more edge devices are associated with the same target from different angles. In some embodiments, a first edge device provides the location information of the target and one or more other edge devices (e.g., the edge device 516) will collect sensor data of the target based on the location information. In one example, the second edge device (e.g., the edge device 516) may identify the target to be an object of interest (e.g., a newer vehicle), and the second edge device via the AIP and/or one or more other AIPs in the AIP system incorporating one or more AIPs is configured to direct a third edge device (e.g., the edge device 514) to collect sensor data regarding the target.

According to certain embodiments, two or more edge devices may communicate with each other and make a determination that the collected sensor data is of the same target (e.g., the same vehicle). In some embodiments, the determination of the same target is done using geospatial data and/or temporal information using one or more algorithms (e.g., one or more naive algorithms), for example, using simple correlation algorithms. In certain embodiments, the AIP system can make a determination of the same target using one or more sensor data (e.g., image data, video data, sonar data, electronic signals, etc.) and one or more models (e.g., computer vision models/algorithms). In one example, a computer vision algorithm on an edge device can determine that this is the same target from one or more different angles collected from one or more edge devices.

According to some embodiments, the AIP and/or the AIP system can use one or more protocols for communications among two or more components of the AIP systems. In certain embodiments, the AIP allows decision-making at the edge. In some embodiments, two or more edge devices each may have one or more sensors and may be at a location different from each other. In one example, the sensors at the two or more edge devices are configured to collect data regarding the same target (e.g., cameras taking pictures of the same target). In certain embodiments, the AIP and/or the AIP system can synchronize respective AIPS and two or more edge devices (e.g., the four edge devices 510, 512, 514, 516) that are collecting data associated with the same target. In some embodiments, the AIP and/or the AIP system can synchronize two or more edge devices to enhance the accuracy (e.g., the accuracy of the detection) by leveraging the strengths of different sensor data. For example, some sensor data are good at providing the location of a detection while others are good at providing characteristics of a detection.

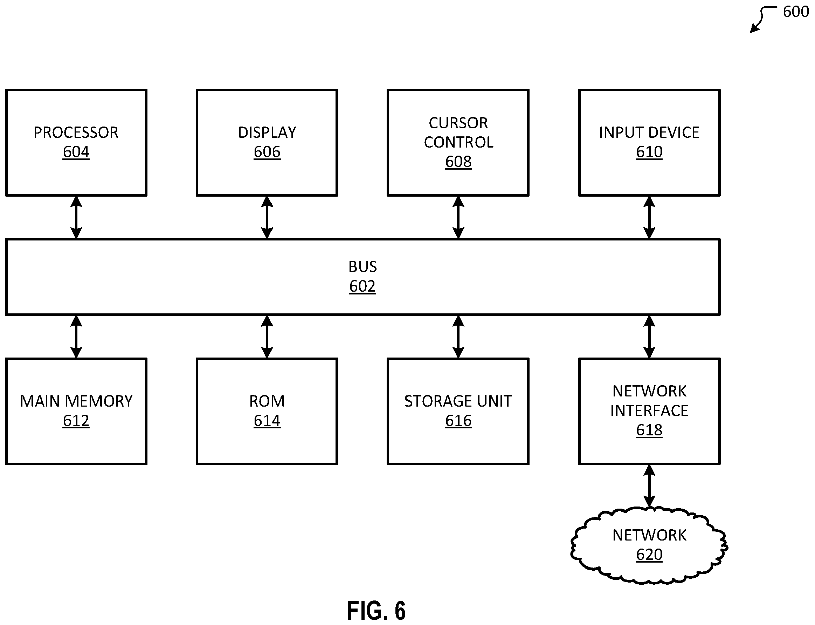

FIG. 6 is a simplified diagram showing a computing system for implementing a system for model selection and update operation according to one embodiment of the present invention. This diagram is merely an example, which should not unduly limit the scope of the claims. One of ordinary skill in the art would recognize many variations, alternatives, and modifications. The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the method 300 or 400 are performed by the computing system 600. In some examples, the bus 602 is coupled to the processor 604, the display 606, the cursor control component 606, the input device 610, the main memory 612, the read only memory (ROM) 614, the storage unit 616, and/or the network interface 618. In certain examples, the network interface is coupled to a network 620. For example, the processor 604 includes one or more general purpose microprocessors. In some examples, the main memory 612 (e.g., random access memory (RAM), cache and/or other dynamic storage devices) is configured to store information and instructions to be executed by the processor 604. In certain examples, the main memory 612 is configured to store temporary variables or other intermediate information during execution of instructions to be executed by processor 604. For examples, the instructions, when stored in the storage unit 616 accessible to processor 604, render the computing system 600 into a special-purpose machine that is customized to perform the operations specified in the instructions. In some examples, the ROM 614 is configured to store static information and instructions for the processor 604. In certain examples, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some examples, the input device 610 (e.g., alphanumeric and other keys) is configured to communicate information and commands to the processor 604. For example, the cursor control 608 (e.g., a mouse, a trackball, or cursor direction keys) is configured to communicate additional information and commands (e.g., to control cursor movements on the display 606) to the processor 604.

In some embodiments, some or all processes (e.g., steps) of the method 300 or 400 are performed by the system 600. In certain examples, some or all processes (e.g., steps) of the method 300 or 400 are performed by a computer and/or a processor directed by a code. For example, a computer includes a server computer and/or a client computer (e.g., a personal computer). In some examples, some or all processes (e.g., steps) of the method 300 or 400 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, a method for model selection and update operation comprises: receiving a model request, the model request including one or more request parameters, the one or more request parameters including at least one selected from a group consisting of a type of computing model, a processing characteristic, and a data characteristic; receiving information associated with a plurality of computing models from a model repository; selecting one or more computing models of the plurality of computing models based upon the model request and the received information; compiling a container request based on the model request and the one or more selected computing models; transmitting the container request to a container infrastructure; and coupling the one or more selected computing models to an artificial intelligence inference platform (AIP). The method is performed using one or more processors. For example, the method is implemented according to at least FIG. 1, FIG. 2, FIG. 3 and/or FIG. 4.

In some embodiments, the container infrastructure is configured to allocate one or more resources associated with at least one of the one or more selected computing models. In some examples, the one or more resources includes one or more computing resources or one or more storage resources. In some examples, the compiling a container request based on the model request and the one or more selected computing models comprises extracting one or more model parameters from the model request, and generating the container request based upon the one or more model parameters. The container request is generated in a format compliant with an interface of the container infrastructure. In certain embodiments, the container infrastructure is configured to instantiate at least one of the one or more selected computing models. In some examples, the container request includes one or more configurations or one or more connection requirements of the one or more selected computing models. The container infrastructure is configured to instantiate the at least one of the one or more selected computing models based at least in part upon the one or more configurations or the one or more connection requirements. In some examples, the container request includes metadata corresponding to the one or more selected computing models. The container infrastructure is configured to instantiate the at least one of the one or more selected computing models based at least in part upon the metadata. In some embodiments, the container infrastructure is configured to update at least one of the one or more selected computing models. In some examples, the method further comprises compiling a processing pipeline based at least in part upon the model request. In certain examples, the processing pipeline includes at least a first computing model and a second computing model operating sequentially, such that an output of the first computing model is an input of the second computing model. In some examples, the processing pipeline includes a third computing model operating in parallel with respect to the first computing model. In some examples, the processing pipeline includes at least a first computing model and a second computing model operating in parallel. In certain examples, the one or more selected computing models include a large language model (LLM).

According to certain embodiments, a system comprising: one or more memories comprising instructions stored thereon; and one or more processors configured to execute the instructions and perform operations comprising: receiving a model request, the model request including one or more request parameters, the one or more request parameters including at least one selected from a group consisting of a type of computing model, a processing characteristic, and a data characteristic; receiving information associated with a plurality of computing models from a model repository; selecting one or more computing models and the received information based upon the model request and the received information; compiling a container request based on the model request and the one or more selected computing models; transmitting the container request to a container infrastructure; and coupling the one or more selected computing models to an artificial intelligence inference platform (AIP). For example, the system is implemented according to at least FIG. 1, FIG. 2, FIG. 3, and/or FIG. 4.

In some embodiments, the container infrastructure is configured to allocate one or more resources associated with at least one of the one or more selected computing models. In some examples, the one or more resources includes one or more computing resources or one or more storage resources. In some examples, the compiling a container request based on the model request and the one or more selected computing models comprises extracting one or more model parameters from the model request, and generating the container request based upon the one or more model parameters. The container request is generated in a format compliant with an interface of the container infrastructure. In certain embodiments, the container infrastructure is configured to instantiate at least one of the one or more selected computing models. In some examples, the container request includes one or more configurations or one or more connection requirements of the one or more selected computing models. The container infrastructure is configured to instantiate the at least one of the one or more selected computing models based at least in part upon the one or more configurations or the one or more connection requirements. In some examples, the container request includes metadata corresponding to the one or more selected computing models. The container infrastructure is configured to instantiate the at least one of the one or more selected computing models based at least in part upon the metadata. In some embodiments, the container infrastructure is configured to update at least one of the one or more selected computing models. In some examples, the operations further include compiling a processing pipeline based at least in part upon the model request. In some examples, the processing pipeline includes at least a first computing model and a second computing model operating sequentially, such that an output of the first computing model is an input of the second computing model. In some examples, the processing pipeline includes a third computing model operating in parallel with respect to the first computing model. In some examples, the processing pipeline includes at least a first computing model and a second computing model operating in parallel. In certain examples, the one or more selected computing models include a large language model (LLM).

According to some embodiments, a method for model selection and update operation comprises: receiving a first model request including one or more first request parameters, the one or more first request parameters including at least one selected from a group consisting of: a type of computing model, a processing characteristic, and a data characteristic; receiving information associated with a plurality of computing models from a model repository; selecting at least a first computing model and a second computing model based upon the first model request; compiling a processing pipeline based at least in part upon the first model request, the processing pipeline including at least the first computing model and the second computing model; compiling a first container request based on the first model request, the first computing model, and the second computing model; transmitting the first container request to a container infrastructure; and coupling the first computing model and the second computing model to an AIP. The method is performed using one or more processors. For example, the method is implemented according to at least FIG. 1, FIG. 2, FIG. 3 and/or FIG. 4.

In some embodiments, the method further includes: receiving a second model request including one or more second request parameters that are different from the one or more first request parameters, the one or more second request parameters including at least one selected from a group consisting of: a type of computing model, a processing characteristic, and a data characteristic; selecting at least a third computing model based upon the second model request; compiling a second container request based on the second model request and the third computing model; transmitting the second container request to the container infrastructure; decoupling the first computing model or the second computing model from the AIP; and coupling the third computing model to the AIP. For example, the first computing model is a first large language model. As an example, the second computing model is a second large language model.

Embodiments described above provide methods and systems in which a suitable computing model is identified for use in a particular application. The computing model is identified based on information retrieved from a repository of computing models and a model request, which includes request parameters. The identified model is indicated in a container request, which causes a container infrastructure to instantiate a version of the model. An artificial intelligence inference platform (AIP) is coupled to the instantiated version of the model such that it can provide inputs to the model and receive outputs from the model. An advantage that can flow from this is that different computing models suitable for different applications can be identified coupled to the AIP depending on the particular requirements of the circumstances as indicated in the request parameters in model request.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for model selection and update operation performed by one or more processors, the method comprising:
receiving a model request including one or more request parameters, the one or more request parameters including at least one selected from a group consisting of: a type of computing model, a processing characteristic, and a data characteristic;
receiving information associated with a plurality of computing models from a model repository;
selecting one or more computing models of the plurality of computing models based upon the model request and the received information;
compiling a container request based on the model request and the one or more selected computing models;
transmitting the container request to a container infrastructure; and
coupling the one or more selected computing models to an artificial intelligence inference platform (AIP);

2. The method of claim 1, wherein the container infrastructure is configured to allocate one or more resources associated with at least one of the one or more selected computing models.

3. The method of claim 2, wherein the one or more resources includes one or more computing resources or one or more storage resources.

4. The method of any preceding claim, wherein the compiling a container request based on the model request and the one or more selected computing models comprises:
extracting one or more model parameters from the model request; and
generating the container request based upon the one or more model parameters;
wherein the container request is generated in a format compliant with an interface of the container infrastructure.

5. The method of any preceding claim, wherein the container infrastructure is configured to instantiate at least one of the one or more selected computing models.

6. The method of any preceding claim, wherein the container request includes one or more configurations or one or more connection requirements of the one or more selected computing models;
wherein the container infrastructure is configured to instantiate the at least one of the one or more selected computing models based at least in part upon the one or more configurations or the one or more connection requirements.

7. The method of any preceding claim, wherein the container request includes metadata corresponding to the one or more selected computing models;
wherein the container infrastructure is configured to instantiate the at least one of the one or more selected computing models based at least in part upon the metadata.

8. The method of any preceding claim, wherein the container infrastructure is configured to update at least one of the one or more selected computing models.

9. The method of any preceding claim, further comprising: compiling a processing pipeline based at least in part upon the model request.

10. The method of claim 9, wherein the processing pipeline includes at least a first computing model and a second computing model operating sequentially, such that an output of the first computing model is an input of the second computing model.

11. The method of claim 10, wherein the processing pipeline includes a third computing model operating in parallel with respect to the first computing model.

12. The method of claim 9, wherein the processing pipeline includes at least a first computing model and a second computing model operating in parallel.

13. The method of claim 1, wherein the one or more selected computing models include a large language model.

14. A system, comprising:
one or more memories comprising instructions stored thereon; and
one or more processors configured to execute the instructions and perform operations in accordance with the method of any of claims 1 to 13.

15. A method for model selection and update operation performed using one or more processors, the method comprising:
receiving a first model request including one or more first request parameters, the one or more first request parameters including at least one selected from a group consisting of: a type of computing model, a processing characteristic, and a data characteristic;
receiving information associated with a plurality of computing models from a model repository;
selecting at least a first computing model of the plurality of computing models and a second computing model of the plurality of computing models based upon the first model request and the received information;
compiling a processing pipeline based at least in part upon the first model request, the processing pipeline including at least the first computing model and the second computing model;
compiling a first container request based on the first model request, the first computing model, and the second computing model;
transmitting the first container request to a container infrastructure; and
coupling the first computing model and the second computing model to an artificial intelligence inference platform (AIP).

16. The method of claim 15, further comprising:
receiving a second model request including one or more second request parameters that are different from the one or more first request parameters, the one or more second request parameters including at least one selected from a group consisting of: a type of computing model, a processing characteristic, and a data characteristic;
selecting at least a third computing model based upon the second model request;
compiling a second container request based on the second model request and the third computing model;
transmitting the second container request to the container infrastructure;
decoupling the first computing model or the second computing model from the AIP; and
coupling the third computing model to the AIP.

17. The method of claim 15 or claim 16, wherein the first computing model is a first large language model and, optionally, wherein the second computing model is a second large language model.
